Europäisches Patentamt

European Patent Office

Office européen des brevets

(19)

(11) **EP 1 686 192 A1**

(12) **EUROPEAN PATENT APPLICATION**
published in accordance with Art. 158(3) EPC

(43) Date of publication:
**02.08.2006 Bulletin 2006/31**

(21) Application number: **04799840.6**

(22) Date of filing: **19.11.2004**

(51) Int Cl.:
*C13K 1/00* (2006.01)    *C13K 7/00* (2006.01)
*C13K 13/00* (2006.01)    *C08B 31/00* (2006.01)

(86) International application number:
**PCT/JP2004/017638**

(87) International publication number:
**WO 2005/049869 (02.06.2005 Gazette 2005/22)**

(84) Designated Contracting States:
**AT BE BG CH CY CZ DE DK EE ES FI FR GB GR HU IE IS IT LI LU MC NL PL PT RO SE SI SK TR**

(30) Priority: **21.11.2003 JP 2003393118**

(71) Applicant: **Tama-Tlo Corporation Hachioji-shi, Tokyo 192-0083 (JP)**

(72) Inventors:
• **FUNAZUKURI, Toshitaka,**
  **c/o Chuo University**
  **Tokyo 112-8551 (JP)**
• **MIYAZAWA, Tetsuya,**
  **c/o Chuo University**
  **Tokyo 112-8551 (JP)**

(74) Representative: **Forstmeyer, Dietmar et al**
  **BOETERS & LIECK**
  **Oberanger 32**
  **80331 München (DE)**

(54) **METHOD OF HYDROLYZING ORGANIC COMPOUND**

(57)    A method of hydrolyzing an organic compound (in particular, polysaccharides such as starch, guar gum, or cellulose), **characterized in that** the hydrothermal reaction is performed in hot water with a pressure of 5 to 100 MPa and a temperature of 140 to 300°C, containing carbon dioxide being added by pressure application.

EP 1 686 192 A1

**Description**

Technical Field

The present invention relates to a method of hydrolyzing an organic compound, and more specifically to a method of hydrolyzing an organic compound (in particular, polysaccharides such as starch) by a hydrothermal reaction in hot water containing carbon dioxide being added by pressure application.

Background Art

In recent years, a biomass is considered to be a potent candidate for a novel resource/energy source to replace fossil fuel for fear of depletion of the fossil fuel and a large release of a greenhouse gas caused by use of the fossil fuel. Glucose and oligomers thereof, which are obtainable by hydrolyzing cellulose being a representative of the biomass, are expected as value-added chemical products, foods, pharmaceutical materials, cosmetic materials, or feeds. In addition, for example, fermentation thereof may yield an ethanol.

Conventionally, as methods of degrading polysaccharides such as starch, there are known three methods including (1) acid hydrolysis, (2) enzyme hydrolysis, and (3) hydrolysis with subcritical water or supercritical water (refer to, for example, JP 2000-210537 A; Shiro Saka and Tomonori Ueno, Chemical conversion of various celluloses to glucose and its derivatives in supercritical water, Cellulose, 6, p,177-191 (1999); Ortwin Bobleter, Hydrothermal degradation of polymers derived from plant, Prog. Polym. Sci., 19, p.797-841 (1994)).

The acid hydrolysis is a degradation method using an acid such as a hydrochloric acid or a sulfuric acid. According to this method, operations may be performed at an ordinary pressure when the temperature is an approximately ordinary temperature or a slightly higher temperature. However, treatment time therefor is relatively long, and removal of the acid or neutralization operation is required after the treatment.

The enzyme hydrolysis is costly because of using an enzyme, and the treatment time becomes longer.

The hydrolysis with subcritical water or supercritical water is a method to perform fast hydrolysis in the supercritical water in a state where the temperature is higher than a critical temperature of water (374°C) or in the subcritical water in a state where the temperature slightly lower than the critical temperature. However, the method is still in an investigational/experimental stage at present, and has not been put to practical use yet. Accordingly, at present, available is only a reported case regarding powder samples. Further, the treatment time is very fast, but it is difficult to inhibit secondary degradation of generated monosaccharides (such as glucose) because of operations at the high temperature and the high pressure, which causes a disadvantage in that the yields of the monosaccharides are low and an amount of degraded products becomes larger. Of the degraded products, in particular, 5-HMF (5-hydroxymethylfurfural) causes inhibition of fermentation. Therefore, considering use of the hydrolyzed solution as a material for fermentation without treatment, it is desired to increase the yields of the monosaccharides by suppressing generation of by-products as much as possible.

Disclosure of Invention

The present invention is a method of hydrolyzing an organic compound, characterized in that the hydrothermal reaction is performed in hot water with a pressure of 5 to 100 MPa and a temperature of 140 to 300°C, containing carbon dioxide being added by pressure application.

Further, the present invention is a method of producing a monosaccharide/oligosaccharide from a polysaccharide, characterized in that the polysaccharide is hydrolyzed by a hydrothermal reaction in hot water with a pressure of 5 to 100 MPa and a temperature of 140 to 300°C, containing carbon dioxide being added by pressure application.

Other and further features and advantages of the invention will appear more fully from the following description, taken in connection with the accompanying drawings.

Brief Description of the Drawings

Fig. 1 is a graph showing a relationship between a yield of glucose and an added amount of carbon dioxide in hydrolysis of starch (Example 1).
Fig. 2 is a graph showing a relationship between a ratio of a yield of 5-HMF to glucose and an amount of carbon dioxide added in the hydrolysis of starch (Example 1).
Fig. 3 is a graph showing the relationship between a yield of galactose and an added amount of carbon dioxide in hydrolysis of agar (Example 2).

Fig. 4 is a graph showing a relationship between yields of monosaccharides and an added amount of carbon dioxide in hydrolysis of guar gum (Example 3).

Disclosure of Invention

According to the present invention, there is provided the following means:

(1) A method of producing a monosaccharide/oligosaccharide from a polysaccharide, characterized in that the polysaccharide is hydrolyzed by a hydrothermal reaction in hot water with a pressure of 5 to 100 MPa and a temperature of 140 to 300°C, containing carbon dioxide being added by pressure application;
(2) The method of producing a monosaccharide/oligosaccharide from a polysaccharide according to Item (1) characterized in that the polysaccharide is starch, agar, guar gum, or cellulose;
(3) The method of producing a monosaccharide/oligosaccharide from a polysaccharide according to Item (1) or (2), characterized in that the carbon dioxide content is a maximum limit amount to reaching a saturated amount of a solubility in the hot water;
(4) A method of hydrolyzing an organic compound, characterized in that the hydrothermal reaction is performed in hot water with a pressure of 5 to 100 MPa and a temperature of 140 to 300°C, containing carbon dioxide being added by pressure application;
(5) The method of hydrolyzing an organic compound according to Item (4), characterized in that the carbon dioxide content is a maximum limit amount to reach a saturated amount of a solubility in the hot water; and
(6) The method of producing glucose and an oligosaccharide thereof, characterized by: using as a material a starch-containing agricultural product, wood, or paper; and employing the method according to any one of Items (1) to (5).

Best Mode for Carrying Out the Invention

Hereinafter, the present invention will be described in detail.
The present invention relates to a method of hydrolyzing an organic compound, characterized in that the hydrothermal reaction is performed in hot water with a pressure of 5 to 100 MPa and a temperature of 140 to 300°C, containing carbon dioxide being added by pressure application. The organic compound meant in the present description is an organic compound having an ester or ether bond, and specific examples thereof include: polymers generated by condensation polymerization such as polyesters or polyamides including polyethylene terephthalate, polycarbonate, or nylon; glycerides such as monoglyceride, diglyceride, or triglyceride; proteins; and polysaccharides. In the present invention, the polysaccharides are particularly preferable.
In the present description, the term "polysaccharides" refers to a polymer compound that generates monosaccharides by the hydrolysis, and specific examples thereof include starch, agar, guar gum, cellulose, glycogen, and pectic acid. The present invention is particularly preferably applied to any of starch, agar, guar gum, or cellulose. Note that both cellulose and starch are natural polysaccharides obtained by polymerization of glucose, but have completely different chemical structures, thereby being completely different in physical and chemical properties. Starch is degraded at the lower temperature compared to cellulose, so in the conventional method, i.e., in the hydrolysis method in supercritical water, it is necessary to control the reaction time so as to be shorter than that in the case of cellulose, which was difficult to realize experimentally. On the other hand, the hydrolysis method of the present invention may be applied to entire natural polysaccharides as well as starch and cellulose without any difficulty.
A product obtained by the hydrolysis reaction of the present invention is preferably a monosaccharide (such as glucose or galactose) or an oligosaccharide in the case that the organic compound being a reaction target belongs to polysaccharides. Appropriate control of the treatment conditions (temperature, period of time) enables arbitrary synthesis of various compounds with a wide-ranging polymerization degree, i.e., any one of compounds selected in a range from a monosaccharide to an oligosaccharide with a high polymerization degree.
In the present invention, the hydrolysis is performed in hot water. Water has a hydrolytic action by a hydrogen ion and a hydroxide ion, and in high-temperature and high-pressure water, the ionic product that indicates the amounts of such ions increases, resulting in a severe activation of the hydrolytic action.
In the present description, the term "hot water" refers to water under conditions of a pressure of 5 to 100 MPa, preferably 10 to 50 MPa, more preferably 10 to 30 MPa and a temperature of 140°C or more, preferably 140 to 300°C, more preferably 150 to 300°C. In the present description, the term "supercritical water" refers to water under conditions of the critical point (375°C, 22 MPa) or more, and the term "subcritical water" refers to water under conditions of a pressure of 8.5 to 22 MPa and a temperature of over 300°C and less than 375°C. Therefore, in the present description, hot water is specifically distinguished from supercritical water or subcritical water. In the case of degradation of the polysaccharides, the higher the treatment temperature is, the more easily the polysaccharides and products thereof, i.e., a monosaccharide and an oligosaccharide denature. In the present invention, the hydrolysis is performed in the hot water that has a lower temperature than the supercritical water or the subcritical water, so there is an advantage in that polysaccharides and the like are not liable to denature.

The preferable temperature of the hot water depends on the kinds of the organic compounds to be hydrolyzed. Taking polysaccharides as examples, in the case of starch and guar gum, the temperature of the hot water is preferably 160°C or more, more preferably 180 to 260°C, particularly preferably 180 to 240°C. In the case of cellulose, the temperature thereof is preferably 240°C or more, more preferably 280 to 300°C. In the case of agar and pectic acid, the temperature thereof is preferably 140°C or more, more preferably 160 to 260°C.

In the present invention, the hydrolysis is performed in the hot water containing carbon dioxide being added by pressure application. In the present invention, a method of adding carbon dioxide is that carbon dioxide is not caused to generate by adding a carbonate to the hot water, but the carbon dioxide is directly dissolved in the hot water. The carbon dioxide may be in any of the form of gas, liquid, or solid. In the case of using the carbonate, the hot water becomes basic or neutral. Contrary to this, in the case of the present invention that the carbon dioxide is dissolved in the hot water, the amount of the dissolved carbon dioxide increases by raising the temperature and the pressure, thereby increasing the hydrogen ion concentration and lowering the pH value in the hot water. That is, according to the present invention, the hydrolysis may be performed under acidic conditions without using an acid such as a sulfuric acid, and the similar effect to that of the hydrolysis using the acid such as the sulfuric acid may be obtained. Further, the concentration of the carbon dioxide in the solution can be lowered and the acidity can be lowered, by only returning the pressure to the ordinary pressure by pressure reduction, so a neutralization operation is not required after the reaction. In addition, the treatment is performed at a high temperature, so the very fast treatment speed (30 minutes or less) can be achieved compared to acid hydrolysis (the order of magnitude of hours) by a room-temperature or a heated acid solution (100°C or less).

Moreover, in the case of the hydrolysis of polysaccharides, if a generated product such as glucose is present in a reactor after completion of production, the product gradually degrades and causes production of 5-HMF (5-hydroxymethylfurfural), which may cause inhibition of fermentation. However, according to the present invention, the carbon dioxide can be disappeared from the solution only by returning the pressure to the ordinary pressure by the pressure reduction, thereby lowering the acidity and rapidly decelerating the hydrolysis reaction. As a result, secondary degradation of the product may be suppressed.

The amount of carbon dioxide to be used is preferably large and is particularly preferably the maximum amount to reach a saturated amount of the solubility in the hot water. For example, in the case of hot water with a pressure of 50 MPa and a temperature of 200°C, the amount of carbon dioxide in a liquid phase is preferably 4.7% (mole fraction).

In the case of hydrolysis of polysaccharides, use of the carbon dioxide in addition to the hot water conditions may significantly improve the yield of a monosaccharide in a product while suppressing the secondary degradation of the monosaccharides. For example, it may make the yield of starch be increased about 10-fold. Meanwhile, it may make the yields of agar and guar gum be improved to about 10 to 25%, though the agar and guar gam hardly degrade only by the hot water in a short period of time.

According to the present invention, in the case of the hydrolysis of polysaccharides, the degree of polymerization of starch may be controlled so as to yield various compounds with a wide-ranging polymerization degree, i.e., any one of compounds selected in a range from a fine particle with a large degree of polymerization to a monomer (glucose), by appropriately controlling the treatment time. Specifically, glucose as a monosaccharide, and maltose and maltooligosaccharide as oligosaccharides are produced, that is, the monosaccharide to the oligosaccharide with a degree of polymerization of about 50 may be generated. To mainly generate glucose as a monosaccharide in the entire generated product, the reaction conditions, i.e., the temperature of the hot water and the reaction time are preferably set to 200 to 240°C and 5 to 90 minutes, respectively. Note that as optimum reaction conditions, it is thought that the reaction time may be short when the temperature of the hot water is high, and the reaction time is lengthened when the temperature of the hot water is low.

In the present invention, separation of a monosaccharide and an oligosaccharide may be performed by, for example, chromatography (in particular, gel filtration chromatography) or crystallization that utilizes the difference between the solubilities.

In the present invention, the pressure is returned to the ordinary pressure by pressure reduction after the hydrolysis reaction. The concentration of carbon dioxide in a solution decreases by the pressure reduction, resulting in decreasing the acidity. The higher the temperature is, the lower the solubility of the carbon dioxide is, so the solution becomes nearly weak acid (pH = about 5, which is based on the saturated solubility of the carbon dioxide at a room temperature). Therefore, in the present invention, the neutralization operation is not required after the reaction, and the process may be simplified, thereby being capable of reducing the cost or energy.

In the present invention, a reactor may be a batch reactor or a continuous reactor, but the continuous reactor is preferable from an industrial viewpoint. In the case of using the batch reactor, a reaction is performed after introducing a sample and water into the reactor and then applying pressure to the reactor including a predetermined amount of carbon dioxide gas, followed by sealing the reactor. The carbon dioxide to be introduced is not limited to gas, and it may be a liquid or solid. In the case of using the continuous reactor, the reaction is performed with continuously supplying water containing the sample and the carbon dioxide to the reactor at a predetermined flow ratio. After the completion of the reaction, the reactor is cooled, and then the pressure is returned to the ordinary pressure by pressure reduction, to thereby lower the concentration of the carbon dioxide in the solution.

Next, descriptions will be made of a method of producing glucose in which a starch-containing agricultural product, wood, or paper is used as a material, and of a method of producing a galacturonic acid in which a pectic acid-containing agricultural product is used as a material.

The above-mentioned hydrolysis methods using a starch-containing agricultural product, wood, or paper, or a pectic acid-containing agricultural product as a material may produce glucose or galacturonic acid, and oligosaccharides thereof.

Specific examples of the starch-containing agricultural products include a potato, a sweet potato, a cassava, a corn, a rice, and oats. Further, specific examples of the pectic acid-containing agricultural products include citrus fruits, an apple, and a sugar beet.

Such methods enable utilization of a food waste, which contains a starch-containing agricultural product or a pectic acid-containing agricultural product; a wood; or a paper, as a resource. Specifically, the obtained glucose or oligosaccharides thereof may be utilized in the fields of foods, medical materials, and the like.

Further, a food waste containing starch, a wood, or a paper may be converted into glucose and oligosaccharides thereof, which may be further converted into materials for fermentation. Specifically, there may be produced materials for ethanol fermentation, lactic acid fermentation, and methane fermentation.

The ethanol fermentation may produce ethanol that may be utilized as a fuel. Further, ethylene may be produced from the ethanol, and various industrially useful compounds may be produced.

The lactic acid fermentation may be produce lactic acid that may be utilized as a material of a biodegradable plastic product.

The methane fermentation may produce methane that may be utilized as a fuel. Further, hydrogen may be produced from the methane and may be utilized as a material for a fuel cell.

The obtained monosaccharide of galacturonic acid and oligosaccharides thereof may be utilized as food additives. In addition, in recent years, they are being studied for the utilization as adsorbents for heavy metals.

According to the hydrolysis method of the present invention, the reaction may be performed in a short period of time, and the neutralization operation is not required after the reaction, so the hydrolysis may be performed effectively.

Further, according to the method of degrading polysaccharides of the present invention, the degree of polymerization of the polysaccharides may be controlled by appropriately controlling the treatment time, which enables the degradation and generation of various compounds with a wide-ranging polymerization degree, i.e., any one of compounds selected in a range from a polymer to a monomer and also enables the generation of monosaccharides or an oligosaccharide.

Further, according to the method of the present invention, polysaccharides such as starch may be degraded quickly, to thereby produce monosaccharides such as glucose effectively.

Moreover, according to the method of the present invention, glucose may be produced effectively from the starch-containing agricultural product, wood, or paper in a relatively short period of time. Most of the food wastes have high moisture content and the disposal thereof becomes an issue. In addition, the amounts of wood and paper in the wastes are massive, thus many of them are wasted and not reused. According to the present invention, by degrading the food waste (starch-containing agricultural product), wood, or paper into glucose with a lower molecular weight, they may be converted into materials for fermentation such as ethanol fermentation, lactic acid fermentation, or methane fermentation, thereby achieving the excellent effect such that a food waste, agricultural waste, wood or paper may be developed into a resource.

Further, according to the method of the present invention, a galacturonic acid may be produced effectively from a pectic acid-containing agricultural product in a relatively short period of time. The monosaccharide of galacturonic acid and oligosaccharides thereof may be utilized as food additives and are expected to be utilized as adsorbents for heavy metals.

The present invention will be described in more detail based on the following examples, but the invention is not intended to be limited thereto.

Examples

(Example 1)

0.03 g of starch and 3 mL of water were placed in a small batch reactor of room temperature (volume: 3.6 mL), and a predetermined amount (g) of solid carbon dioxide (dry ice) was further introduced. Then, the reactor was closed and was put in a molten salt bath maintained at 200°C to initiate the hydrothermal reaction. After, 15 minutes, the reactor was pulled out from the molten salt bath and quenched with water to stop the reaction. Note that the reason why the molten salt bath was used herein is to reach a predetermined temperature in a shorter time compared to an electric furnace heating system, and it reaches a predetermined temperature for about 1 minute.

In the above-described experiment, in the case that the reaction was performed without introducing carbon dioxide, the pH value of the reaction solution was 3.6 after completion of the reaction. The pH value of the reaction solution was lowered after the completion of the reaction due to reaction products. On the other hand, in the case of introducing carbon dioxide, the pH value of the reaction solution was 3.8 after the completion of the reaction. The value was approximately the same as that in the case of not introducing the carbon dioxide, and the concentration of the carbon dioxide in the solution could be lowered by returning the pressure to the ordinary pressure by presser reduction, so the neutralization operation was not required.

Meanwhile, the yield (% by mass) of glucose after the reaction was calculated from the following formula:

$$[(\text{Carbon mass in glucose (g)})/(\text{Carbon mass in starch (g)})] \times 100.$$

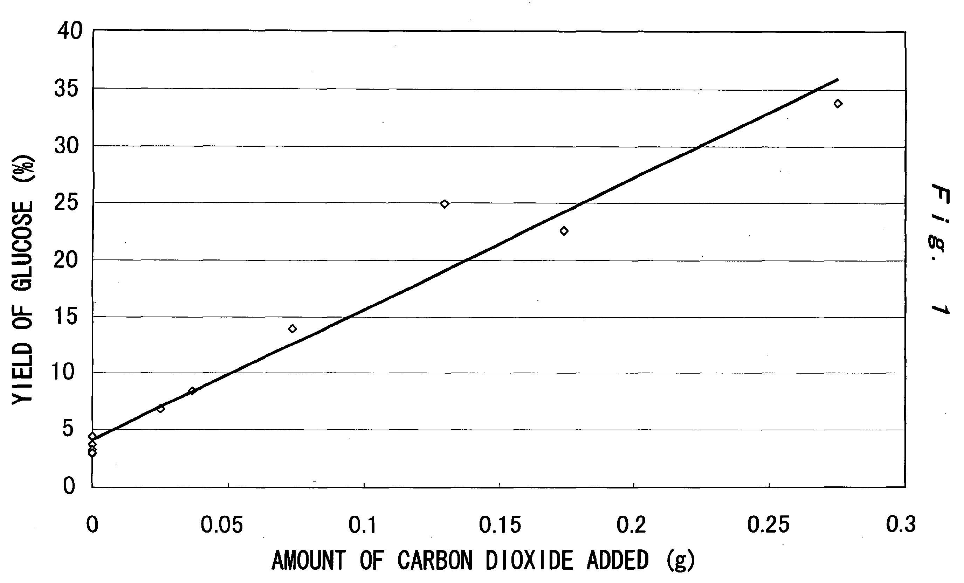

The results are shown in the graph of Fig. 1. In the graph of Fig. 1, the longitudinal axis indicates the yield of glucose calculated from the above-mentioned formula, while the lateral axis indicates the mass (g) of the carbon dioxide supplied to the reactor. As is apparent from Fig. 1, the yield of glucose is 5% or less in the case of adding no carbon dioxide at all, but the yield of glucose was found to increase with increasing supplied carbon dioxide. The result revealed that the yield of glucose increases in the case of hydrolysis using hot water and carbon dioxide in combination compared to the hydrolysis only with hot water. Further, it was found that the larger the amount of added carbon dioxide is, the greater the yield of glucose is.

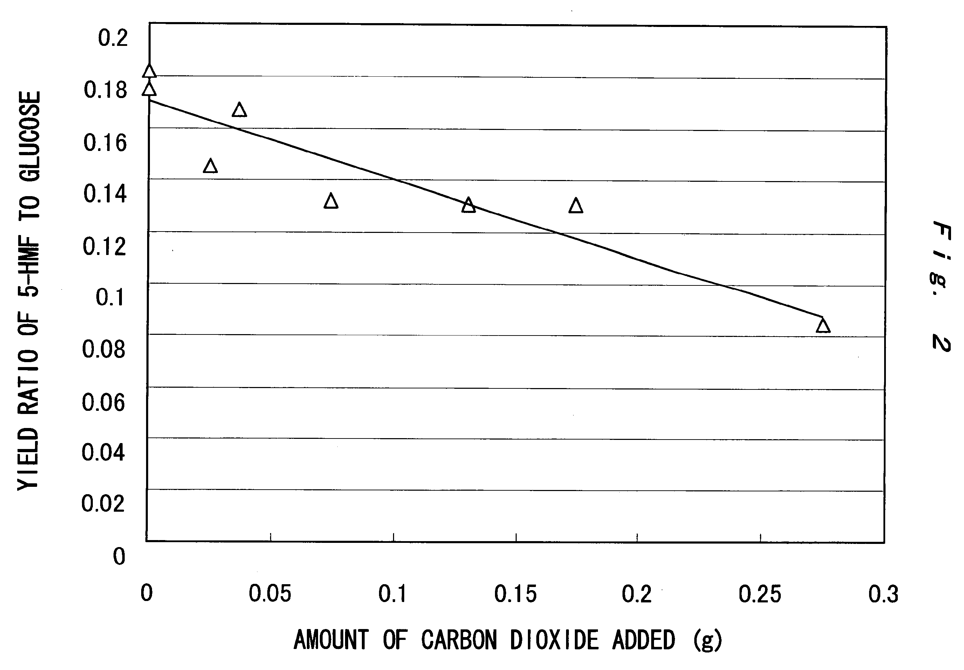

Moreover, the yield of 5-HMF (5-hydroxymethylfurfural), a by-product in the above-mentioned experiment, was calculated in the same manner, and the ratio of the yield of 5-HMF to glucose was calculated. The results are shown in the graph of Fig. 2. In the graph of Fig. 2, the longitudinal axis indicates the ratio of the yield of 5-HMF to glucose, while the lateral axis indicates the mass (g) of carbon dioxide supplied to the reactor. As is apparent from Fig. 2, it was found that the larger the amount of added carbon dioxide is, the smaller the amount of 5-HMF generated as a by-product to the amount of produced glucose is.

Meanwhile, tests were performed while varying the reaction time in the cases that carbon dioxide was added and was not added. The results revealed that, in both cases, when the reaction time was too long, the amount of 5-HMF generated as a by-product was found to increase, but in the case of adding no carbon dioxide, 5-HMF was particularly significantly generated as a by-product, resulting in decreasing the ratio of (the yield of glucose)/(the yield of 5-HMF).

Consequently, the results of the present examples revealed that the reaction can be performed in a short period of time, and the neutralization operation is not required after the reaction, so the hydrolysis can be effectively performed. Further, the larger the amount of added carbon dioxide is, the greater the yield of glucose generated as a primary product is, thereby suppressing the generation of 5-HMF as a by-product.

(Comparative Example 1)

The experiment was performed in the same way as in Example 1 except that any one of 0.1% by mass or 1 % by mass of ammonium carbonate, or 1 mM or 10 mM sodium carbonate was used instead of a predetermined amount of solid carbon dioxide (dry ice). As a result, it was almost impossible to yield glucose. This is attributed to the fact that a side reaction of glucose occurred by the effects of the salt.

In the case of introducing carbon dioxide as a carbonate, the pH value of the carbonate solution before the reaction was 8.5 to 10.5, weak alkaline.

(Example 2)

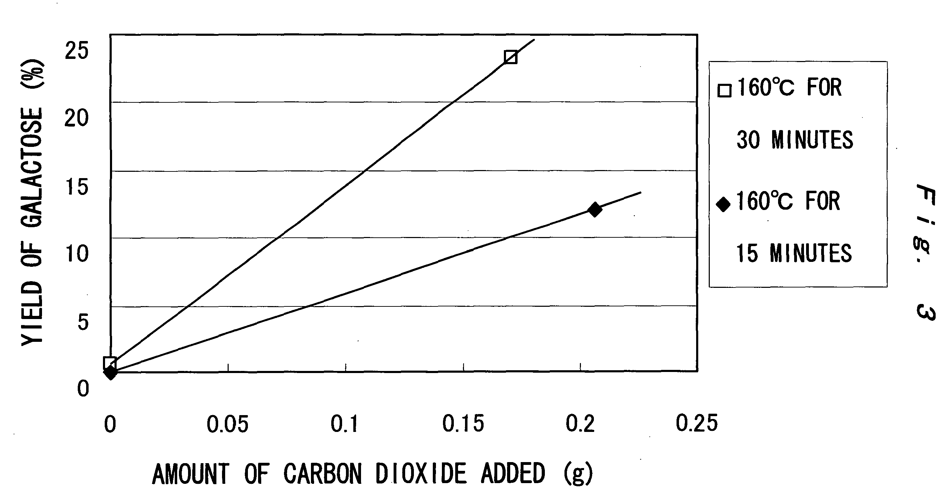

The test was performed in the same way as in Example 1 except that: agar was used instead of starch as a material; the temperature of hot water was changed to 160°C; and the reaction time was changed to 15 minutes and 30 minutes. The results are shown in the graph of Fig. 3. As is apparent from Fig. 3, in the case of the agar, the monosaccharide could hardly be yielded only by hot water, but the yield of the monosaccharide was found to significantly increase by hydrolysis through the hydrothermal reaction using hot water and carbon dioxide in combination compared to hydrolysis with only hot water.

(Example 3)

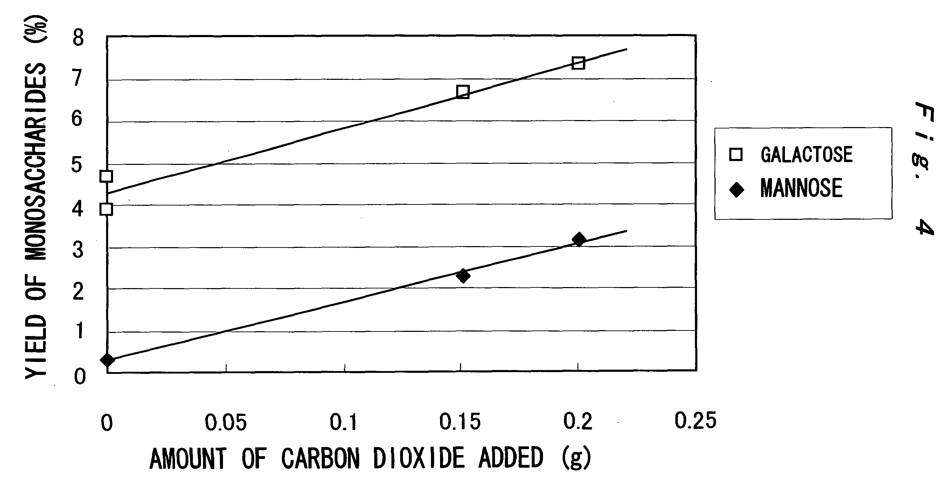

The test was performed in the same way as in Example 1 except that guar gum was used instead of starch as a material. The results are shown in the graph of Fig. 4. As is apparent from Fig. 4, in the case of the guar gum, the yields of the monosaccharides were found to increase by hydrolysis through the hydrothermal reaction using hot water and carbon dioxide in combination compared to hydrolysis with only hot water.

(Example 4)

The reaction was performed at 200°C for 30 minutes using 0.2 g of starch derived from sweet potato as a starch sample, which is a starch-containing agricultural product, 2 mL of water, and 0.52 g of carbon dioxide, to thereby produce glucose from the sample at a high yield of 71.2%. Further, starches derived from wheat, potato, and corn were also subjected to the test in the same way, to thereby produce glucose from them at high yields. The results revealed that the agricultural products containing starch could be developed into resources and utilized effectively.

(Example 5)

The test was performed using wheat, potato, sweet potato, rice, bread, and rice cracker as food wastes in the same way as in Example 1, to thereby produce glucose from each of them at high yields. The results revealed that food wastes could be developed into resources and utilized effectively.

Industrial Applicability

According to the hydrolysis methods of the present invention, the reaction can be performed in a short period of time, and the neutralization operation is not required after the reaction, so the hydrolysis can be effectively performed. In particular, it is possible to hydrolyze polysaccharides such as starch effectively, to thereby generate monosaccharides or oligosaccharides. The generated monosaccharides or oligosaccharides can be utilized as the value-added chemical product, food, or feed, and further the fermentation thereof may yield ethanol. Consequently, the present invention may be utilized for the biomass expected as the novel resource or energy source to replace the fossil fuel.

Having described our invention as related to the present embodiments, it is our intention that the invention not be limited by any of the details of the description, unless otherwise specified, but rather be construed broadly within its spirit and scope as set out in the accompanying claims.

**Claims**

1. A method of producing a monosaccharide/oligosaccharide from a polysaccharide, **characterized in that** the polysaccharide is hydrolyzed by a hydrothermal reaction in hot water with a pressure of 5 to 100 MPa and a temperature of 140 to 300°C, containing carbon dioxide being added by pressure application.

2. The method of producing a monosaccharide/oligosaccharide from a polysaccharide according to claim 1 **characterized in that** the polysaccharide is starch, agar, guar gum, or cellulose.

3. The method of producing a monosaccharide/oligosaccharide from a polysaccharide according to claim 1 or 2, **characterized in that** the carbon dioxide content is a maximum limit amount to reaching a saturated amount of a solubility in the hot water.

4. A method of hydrolyzing an organic compound, **characterized in that** the hydrothermal reaction is performed in hot water with a pressure of 5 to 100 MPa and a temperature of 140 to 300°C, containing carbon dioxide being added by pressure application.

5. The method of hydrolyzing an organic compound according to claim 4, **characterized in that** the carbon dioxide content is a maximum limit amount to reach a saturated amount of a solubility in the hot water.

6. The method of producing glucose and an oligosaccharide thereof, **characterized by**: using as a material a starch-containing agricultural product, wood, or paper; and employing the method according to any one of claims 1 to 5.

Fig. 1

# F i g. 2

# Fig. 3

Fig. 4

<p style="text-align:center">**INTERNATIONAL SEARCH REPORT**</p>

| | International application No. |
|---|---|
| | PCT/JP2004/017638 |

**A. CLASSIFICATION OF SUBJECT MATTER**
Int.Cl$^7$ C13K1/00, 7/00, 13/00, C08B31/00

According to International Patent Classification (IPC) or to both national classification and IPC

**B. FIELDS SEARCHED**

Minimum documentation searched (classification system followed by classification symbols)
Int.Cl$^7$ C13K1/00-13/00, C08B15/00-31/00

Documentation searched other than minimum documentation to the extent that such documents are included in the fields searched

Electronic data base consulted during the international search (name of data base and, where practicable, search terms used)
JSTPlus(JOIS), BIOSIS(DIALOG), WPI(DIALOG)

**C. DOCUMENTS CONSIDERED TO BE RELEVANT**

| Category* | Citation of document, with indication, where appropriate, of the relevant passages | Relevant to claim No. |
|---|---|---|
| X | JP 7-206901 A  (Akzo Nobel NV.), 08 August, 1995 (08.08.95), & EP 657472 A1      & DE 4342442 A1 & TW 267172 A      & US 5543511 A | 1-6 |
| A | JP 2002-085100 A  (National Institute of Advanced Industrial Science and Technology), 26 March, 2002 (26.03.02), (Family: none) | 1-6 |
| A | Yizhou ZHENG, Pretreatment for Cellulose Hydrolysis by Carbon Dioxide Explosion, Biotechnol.Prog, 1998, Vol.14, No.6, pages 890 to 896 | 1-6 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 February, 2005 (24.02.05) | 15 March, 2005 (15.03.05) |

| Name and mailing address of the ISA/ | Authorized officer |
|---|---|
| Japanese Patent Office | |
| Facsimile No. | Telephone No. |

Form PCT/ISA/210 (second sheet) (January 2004)